# EUROPEAN PATENT APPLICATION

(11) **EP 1 574 249 A2**
(43) Date of publication of application: **14.09.2005**
(21) Application number: 05004414.8
(22) Date of filing: 01.03.2005
(51) Int. Cl.: B01D 67/00, B29C 55/02

(54) **Method of making a composite microporous membrane**

(30) Priority: 09.03.2004 US 796473
(71) Applicant: Celgard Inc., South Carolina 28273 (US)
(72) Inventor: Nguyen, Khuy V., Charlotte North Carolina 28217 (US); Simmons, Donald K., Charlotte North Carolina 28204 (US); Chambers, Kevin D., Fort Mill South Carolina 29708 (US); Montagnino, Joe C., Charlotte North Carolina 28226 (US); Ford, Richard Jr., Atlanta Georgia 30327 (US)
(74) Representative: Schröder, Richard

(57) **Abstract**

A method of making a composite microporous membrane includes the steps of: coating a nonporous precursor film with a polymer composition, and then stretching the coated nonporous precursor. Stretching includes a first stretching conducted at a first temperature and a first stretching rate and a second stretching conducted at a second temperature and a second stretching rate. The first stretching rate and the second stretching rate are different.

## Description

A method of making a composite microporous membrane is disclosed herein.

Microporous membranes are known. See, for example, Kesting, R., *Synthetic Polymeric Membranes,* 2nd Edition, John Wiley & Sons, New York, NY (1985). Microporous membranes have many uses including, for example, separation, filtration, diffusion, and barrier applications. These broad applications have been practically applied in medical devices, electrochemical devices, chemical processing devices, pharmaceutical devices, water purification, to name a few. The functionality of a microporous membrane is often a complex function of particular application and the structure (e.g., strength, pore size, porosity, pore tortuosity and thickness of the membrane) and the composition or chemical nature of the membrane. Often times, these and other variables of the membrane must be hand tailored to the particular application.

This tailoring of the membrane can be problematic for the membrane engineer. For example, the functional polymer best suited for the particular application cannot be formed into a microporous membrane, or if it can be made into a microporous membrane, that membrane is structurally deficient. Attempts have been made to blend the functional polymer into another polymer that is better able to form a microporous membrane. This solution can work in some instances, but not always. Attempts have been made to coat or laminate a functional polymer onto a microporous membrane. This solution, however, often results in the functional polymer blinding or filling the pores of the microporous membrane. Accordingly, no satisfactory solution has been found.

U.S. Patent Publication No. 2003/0104273 discloses a method for making a composite microporous membrane. There, a nonporous precursor [paragraph 0069] is coated [paragraph 0075] with a gellable polymer [paragraph 0071] and then the coated precursor is stretched to form pores [paragraph 0075]. The stretching step is further described as a two-step process including a low-temperature stretching followed by a high-temperature stretching [paragraphs 0093 - 0095, 0123 - 0124, and 0144].

There is, however, a need to provide a better process for making composite microporous membranes.

A method of making a composite microporous membrane includes the steps of: coating a nonporous precursor film with a polymer composition, and then stretching the coated nonporous precursor. Stretching includes a first stretching conducted at a first temperature and a first stretching rate and a second stretching conducted at a second temperature and a second stretching rate. The first stretching rate and the second stretching rate are different.

A composite microporous membrane is a microporous membrane having, at least, a microporous substrate with a microporous coating on at least one surface of the substrate. The coating may be on one or both surfaces of the substrate. Multiple coatings may reside on one or both of surfaces of the substrate, and coatings on one side may differ from those on the other side. The coating (or multiple coatings) may also reside between two substrates, as will be discussed below. While flat sheet membranes are discussed herein, the membrane may also be a hollow fiber membrane.

The substrate must be capable of being made microporous by the CELGARD process. The CELGARD process, also referred to as the "extrude, anneal, stretch" or "dry stretch" process, extrudes a semi-crystalline polymer and induces porosity by simply stretching the extruded precursor (no solvents or phase inversion are used). Kesting, *Synthetic Polymeric Membranes,* 2nd Edition, John Wiley & Sons, New York, NY (1985). The semi-crystalline polymers are preferably polyolefins. Most preferred are high density polyethylene (HDPE) and polypropylene (PP). HDPE has a density in the range of 0.94 to 0.97, preferably 0.941 to 0.965. HDPE has a molecular weight up to 500,000, preferably in the range of 200,000 to 500,000. Blown film grade HDPEs are preferred. PP are preferably film grade homopolymers.

The coating does not have to be capable of being made microporous by the CELGARD process. The coating may be any polymer, copolymer, or blend (these polymer compositions are discussed in greater detail below) that will provide the desired functionality to the composite membrane. The term 'coating' is used to describe several possible methods of depositing the polymer composition onto the substrate. In one method (coating method), a solution containing a polymer or a molten polymer is applied (e.g., dipping, rolling, kiss rolling, printing, brushing, etc.) to the substrate, then the solvent is driven off or the polymer solidifies and the polymer is adhered to the substrate. In another method (laminating method), a discrete film of the polymer composition is formed and then that film is adhered to the substrate. In another method (casting method), the polymer composition (either a solution or molten) is cast on to the substrate and the cast layer is adhered to the substrate. In another method (co-extrusion method), the polymer composition is co-extruded with the substrate and a multi-layer film is formed thereby. Each of the foregoing methods are equally viable methods for applying the polymer composition to the substrate, the choice will depend on, among other things, the affinity of the polymer composition to the substrate, film formability of the polymer composition, and ability of the solidified polymer composition to form pores. The term 'adhered' as used above means with or without adhesive. Depending upon the polymer composition, adjuvants (e.g., auxiliaries to modify the surface tension of the polymer composition) or adhesives may be necessary to facilitate adhesion of the polymer to the substrate.

In each of the foregoing methods, it is possible to apply the polymer composition in solution. Such solutions may be either simple solutions (e.g., solvent plus polymer composition or suspensions or emulsions) or more complex solutions, such as those used in the TIPS (thermal inversion phase separation) process or the solvent extraction process. In those more complex solution processes, the solution will comprise the polymer composition, an extractable (which can be immiscible with the polymer composition at one temperature but not at another), and a solvent (which both the polymer composition and the extractable are miscible and which can be readily (compared to the extractable from the polymer composition) driven from the mixture (solution) of the polymer composition and the extractable). After removal of the solvent, the extractable is removed, typically by leaching or other extraction technique, whereby a microporous or partially microporous coating is formed on the substrate. Removal of the extractable may occur before or after stretching (discussed below).

The polymer compositions include, but are not limited to, low density polyethylenes (LDPE), low molecular weight polyethylenes (LMWPE), linear low density polyethylene (LLDPE), chlorinated polyethylenes and polypropylenes, fluoropolymers (e.g., polyvinylidene fluoride (PVDF) and polyvinyl fluoride (PVF)), polyamides (PA, e.g., nylons), polyesters (e.g., PET, PBT, PEN), polyimides, ethylene vinyl alcohol copolymers (EVOH), ethylene vinyl acetate copolymer (EVA), poly(vinyl acetates), polyacetal (PVAC), ethylene methlacrylate copolymer (EMA), polyketones, cellulose derivatives, polyphenylenesulfides (PPS), poly(phenylsulfone) (PPSU), polyarylethersulfone (PES), polymeric acrylates and methacrylates (PMA, PMMA), silicones, polysiloxanes, poly(vinyl chloride) (PVC), polypyrrol, polyanilin, polyurethanes (PU), copolymers thereof and mixtures thereof.

In operation, the substrate is formed (by the CELGARD process, known in the art) by melting and extruding the substrate polymer. The take-up speed is considerably greater than the extrusion speed so that the crystals of the polymer align themselves in the machine direction in the form of microfibrils. These microfibrils are believed to nucleate the formation of folded-chain row lamellar microcrystallites perpendicular to the machine direction. These row lamellar are consolidated by annealing at a temperature just below the polymer's melting temperature (Tₘ). This annealed substrate is also referred to as the precursor that is a nonporous film.

The polymer composition is then applied to the precursor. If coated, a polymer solution or a molten polymer is prepared. The solution or molten polymer may be applied to the precursor in any convenient manner, such as dipping, spraying, rolling, printing, brushing. Thereafter, the solvent is removed (drying) or solidified, and the polymer is adhered to the precursor. If laminating, the polymer film is prepared. The film may be applied in any convenient manner, such as calendaring (with or without heat and/or pressure). Thereby a coated precursor is formed. If casting, the precursor is formed and wound up. Thereafter, the polymer composition, in either solution or molten form, is cast on to the precursor has it is being unwound. If co-extruded, the precursor and polymer composition are extruded through a co-extrusion die to form a multi-layered nonporous film. Typically, and preferably, the polymer composition is uniformly (i.e., even weight and/or thickness) coated over the surface of the precursor. If desired, another nonporous precursor may be laid over the polymer composition, whereby a sandwich structure, precursor-polymer composition-precursor, is formed. Other variations thereof are obvious.

The coated precursor is then subjected to stretching. Stretching is a multi-stepped process, most often a two-step stretching process. The two-step stretching process includes a low temperature stretch followed by a high temperature stretch. In each stretching step, there are three primary variables, temperature, stretching rate, and stretching ratio. Each of these variables is different between the two steps. Stretching, as used herein, refers to uniaxial stretching.

In the low temperature stretching step, low temperature refers to 0-60°C, preferably 20-45°C. The stretching ratio refers to 2-100%, preferably 5-60%. The stretching rate refers to 100-2000%/min, preferably 200-1200%/min.

In the high temperature stretching step, high temperature refers to 70-220°C, preferably 80-150°C. The stretching ratio refers to 50-400%, preferably 100-220%. The stretching rate refers to 10-200%/min, preferably 20-120%/min.

After stretching, the substrate will be microporous and the coating may be microporous. The microporosity of the coating being caused by the formation of the pores in the substrate. If, however, the coating is not microporous or insufficiently microporous, the microporosity of coating may be obtained or improved by a subsequent treatment. The preferred subsequent treatment is an extraction step, where an inert extractable is removed from coating. In this situation, the inert extractable is mixed into the polymer solution melt or film prior to coating. The inert extractable must remain in the polymer coating until after stretching. Thereafter, the extractable is removed.

The present invention is further illustrated with reference to the following nonlimiting examples.

In the examples, the nonporous precursors were 0.4 mil (10 micron) thick films of: blow molding grade high density polyethylene (HDPE), Melt Index (ASTM D1238) - 0.38 g/10 min, density (ASTM D792) - 0.961 g/cm³, and homopolymer film grade polypropylene (PP), Melt Index (ASTM D1238 @ 230°C/2160G) - 1.5 g/10 min, density (ASTM D1505) - 0.905 g/cm³. The extruded HDPE precursors were annealed at 120°C for 10 mins before further processing. The extruded PP precursors were annealed at 125°C for 10 mins before further processing.

In all coated samples, examples 1-7 and 10-21, the polymer composition was dissolved in a suitable solvent, then the precursor was immersed for 30-60 sec and dried in a hot air oven at 50°C for 30 minutes. For examples 1-7 and 10-14, the solvent was toluene and the solution was prepared at a temperature of 80-90°C. For examples 15-18, the solvent was acetone and the solution was prepared at a temperature of 40°C. For examples 19-21, the solvent was 2-propanol and the solution was prepared at room temperature.

In all laminated samples, examples 8-9, the polymer composition was formed into film and that film heat bonded to the precursor film. The LLDPE (linear low density polyethylene) was formed into a film by thermally induced phase separation (TIPS) technique. The LLDPE film was then bonded to the precursor at a temperature of 100°C.

The coated precursors were then stretched in a two-step stretching process to form the composite microporous membrane. The coated PE precursors were stretched as follows: first stretch temperature - room temperature, first stretch ratio - 60%, first stretch rate 600%/min; followed by second stretch temperature - 100°C, second stretch ratio - 100%, second stretch rate - 100%/min. The coated PP precursors were stretched as follows: first stretch temperature - room temperature, first stretch ratio - 35%, first stretch rate - 350%/min; followed by second stretch temperature - 120°C, second stretch ratio - 105%, second stretch rate - 105%/min.

In those examples requiring extraction, examples 1-4 and 13-14, the extractable material (DBP-dibutylphthalate) was removed with methanol at 40°C for 15 min and then dried in a hot air oven at 50°C for 30 min.

In Table 1 below, the results are shown. The film thickness is the total thickness of the composite microporous membrane (10 readings at 10 PSI, are averaged), coating on both sides and Gurley was measured per ASTM D726(B): the time (sec) required to pass 10 cc of air through one square inch of product under a pressure of 12.2 inches of water using a Gurley densometer (Model 4120). The percentages are the weight percent of the polymer in solution.

**TABLE 1**

| **#** | **PRECURSOR** | **POLYMERIC MATERIAL** | **EXTRACTABLE** | **FILM THICKNESS** | **GURLEY** |
|---|---|---|---|---|---|
| | | | | (mil) | (sec) |
| 1 | PE | 4% LD102 | 8% DBP | 1.04 | 25 |
| 2 | PE | 8% LD102 | 8% DBP | 2.0 | 20-30 |
| 3 | PE | 8% LD102 | 16% DBP | 2.1 | 10.0-15.0 |
| 4 | PE | 8% PEWAX 1000 | 8% DBP | 0.41 | 37 |
| 5 | PE | 6% LDPE 102 | NO | 1.50 | 220-430 |
| 6 | PE | 8% PEWAX 1000 + 1 % Vistalon 878 | NO | 1.32 | 60 |
| 7 | PE | 6% PEWAX 1000 + 2% X-1147 | NO | 0.66 | 54 |
| 8 | PE | LLDPE (laminating in PE) | NO | 1.96 | 46.3 |
| 9 | PP | LLDPE (laminating in PP) | NO | 2.09 | 43.1 |
| 10 | PE | 4% PEWAX 1000 +2% MAPEG 400 DS | | 0.64 | 24 |
| 11 | PE | 4% PEWAX 1000 + 2% MAPEG 400 DS | | 0.59 | 30 |
| 12 | PP | 4% PEWAX 1000 + 2% MAPEG 400 DS | | 0.67 | 37 |
| 13 | PP | 4% PP CHLORINATED | 4% DBP | 0.40 | 52 |
| 14 | PE | 4% PP CHLORINATED | 4% DBP | 0.37 | 28 |
| 15 | PP | 4% PVDF KYNAR 2800 | NO | 0.76 | 14 |
| 16 | PP | 6% PVDF KYNAR 2800 | NO | 0.87 | 17 |
| 17 | PP | 2% PVF | NO | 0.51 | 15 |
| 18 | PE | 2% PVF | NO | 0.54 | 11 |
| 19 | PE | 2.5% ETHOXYLATE X-1134 | NO | 0.30 | 127 |
| 20 | PE | 1.25% ETHOXYLATE X-1134 | NO | 0.35 | 17 |
| 21 | PE | 1.25% ETHOXYLATE X-1134 | NO | 0.38 | 20 |

The present invention may be embodied in other forms without departing from the spirit and the essential attributes thereof, and, accordingly, reference should be made to the appended claims, rather than to the foregoing specification, as indicated the scope of the invention.

## Claims

1. A method of making a composite microporous membrane comprising the steps of: coating a nonporous precursor film with a polymer composition; and stretching the coated nonporous precursor, the stretching further comprising a first stretching conducted at a first temperature, a first stretching ratio, and a first stretching rate, and a second stretching conducted at a second temperature, a second stretching ratio, and a second stretching rate, the first stretching rate being different than the second stretching rate.

2. The method of Claim 1 wherein the first stretching rate being greater than the second stretching rate.

3. The method of Claim 1 wherein the first stretching temperature being less than the second stretching temperature.

4. The method of Claim 1 wherein the first stretching ratio being less than the second stretching ratio.

5. The method of Claim 1 further comprising the steps of subsequently extracting a portion of the polymer composition from the stretched coated precursor.

6. The method of Claim 1 wherein coating being selected from the group consisting of coating, laminating, casting , or co-extrusion.

7. The method of Claim 1 wherein the polymer composition being selected from the group consisting of low density polyethylenes, low molecular weight polyethylenes, linear low density polyethylenes, chlorinated polyethylenes, chlorinated polypropylenes, fluoropolymers, polyamides, polyesters, polyimides, ethylene vinyl alcohol copolymers, ethylene vinyl acetate copolymers, poly(vinyl acetates), polyacetals, ethylene methlacrylate copolymers, polyketones, cellulose derivatives, polyphenylenesulfides, poly(phenyl sulfones), polyarylethersulfones, polymeric acrylkates, polymeric methacrylates, silicones, polysiloxanes, poly(vinyl chlorides, poluypyrrols, polyanilins, polyurethanes, copolymers thereof, and mixtures thereof.

8. The method of Claim 1 wherein the first temperature ranges from 0-60°C.

9. The method of Claim 8 wherein the first temperature ranges from 20-45°C.

10. The method of Claim 1 wherein the first stretching ratio ranges from 2-100%.

11. The method of Claim 10 wherein the first stretching ratio ranges from 5-60%.

12. The method of Claim 1 wherein the first stretching rate ranges from 100-2000%/min.

13. The method of Claim 12 wherein the first stretching rate ranges from 200-1200%/min.

14. The method of Claim 1 wherein the second temperature ranges from 70-220°C.

15. The method of Claim 14 wherein the second temperature ranges from 80-150°C.

16. The method of Claim 1 wherein the second stretching ratio ranges from 50-400%.

17. The method of Claim 16 wherein the second stretching ratio ranges from 100-220%.

18. The method of Claim 1 wherein the second stretching rate ranges from 10-200%/min.

19. The method of Claim 18 wherein the second stretching rate ranges from 20-120%/min.

20. The method of Claim 1 wherein prior to stretching, applying a second nonporous precursor on said coating.
